# EUROPEAN PATENT APPLICATION

(11) **EP 2 133 643 A2**
(43) Date of publication of application: **16.12.2009**
(21) Application number: 09159313.7
(22) Date of filing: 04.05.2009
(51) Int. Cl.: F25D 23/06

(54) **Refrigeration apparatus with improved liner**

(30) Priority: 13.06.2008 IT PN20080048
(71) Applicant: Karton S.p.A., 33077 Sacile (PN) (IT)
(72) Inventor: Bressan, Giovanni, 33077 Sacile (Pordenone) (IT)
(74) Representative: Giugni, Valter

(57) **Abstract**

Refrigeration apparatus comprising a liner (1) that is produced by means of a thermoforming process starting from a sheet of thermoplastic material, wherein the outward facing surface (4) of said liner, i.e. the surface thereof that is due to face the layer of insulating material, includes a plurality of reinforcing relief lines (2) that are firmly joined to the surface of said liner and integrally moulded therewith to form a single-piece unitary construction.

## Description

The present invention refers to a refrigeration apparatus, in particular a refrigerator for household or residential application, provided with an improved liner forming the cold storage/freezing compartment thereof; it further refers to the related production process.

A refrigeration apparatus of the above-cited kind is largely known to comprise a main body formed of an outer casing that houses a food storage compartment thereinside. Such food storage compartment is comprised of a liner provided inside said outer casing, wherein the gap forming between said outer casing and said liner is filled a thermally insulating material, usually a suitable polyurethane-based or similar hardened foam.

Such liner is typically produced by a process based on thermoforming or vacuum-forming - as the process is also referred to in the art - a sheet of extruded material, such as for instance polystyrene, ABS or the like. Anyway, such process for producing liners of the noted kind is largely known as such in the art, so that - for the sake of brevity - no further detailed description of it will follow.

Said thermoforming or vacuum-forming process used to produce refrigerator liners is based on forming said sheet of extruded material by heating it and then pulling it down onto a mould surface or, as the case may be, drawing it down into a mould by vacuum, to shape it. The basic feature of such process lies in the fact that it does not strain or deform any portion making up the side walls of the liner to any significant extent, whereas the portions of the liner forming the corners thereof are generally strained to quite marked and plainly apparent extent.

Largely known in the art is the fact that the actual structure of the refrigerator apparatus is mainly based on the mechanical properties of the insulating foam and - albeit to a less significant extent - on the structural properties of the outer casing, which is generally fabricated out of a thin sheet-metal blank.

Generally speaking, the liner of a refrigerator apparatus is not required to ensure any particular structural property as such, since its basic purpose is to just delimit the food storage compartment of the apparatus, by separating it from the insulating material provided therearound, while featuring a smooth surface that is easily and conveniently cleaned and processed in view of allowing for the various necessary food-compartment fittings and accessories, such as shelves, boxes and the like, to be mounted thereinside.

On the other hand, the afore-mentioned circumstance that the corner portions of the liner undergo marked straining- and related thinning-out of the liner walls in the regions near such corner portions - during the forming process, has practically not allowed for any reduction in the actual wall thickness of the starting sheet of material used to form the liner, since any such reduction would imply a serious risk of suffering breakdowns and ruptures in said regions of the liner itself.

As the properties of insulating foams have kept improving over the years, the mechanical properties of the liner and, as a result, the structural characteristics thereof have been downgraded to a status of a less and less important or necessary requirement to be complied with.

It can anyway be most readily appreciated that the purchase cost of the material, which the sheet to be formed into a liner is made of, along with the environmental cost connected with the disposal of such material at the end of the life-cycle of the refrigerator, represents a significant and ever-increasing cost to be sustained, due also to the cost of raw materials in general being subject to continuous increases.

Now, such circumstance is of course becoming increasingly undesired, and certainly unwelcome, in an industrial milieu that is constantly looking for new economy targets, in terms of increasing reduction in costs, and operates on a very large scale, in terms of mass production, in a highly competitive context in which any sort of cost that is felt as not being strictly necessary is the subject of constant review for reduction, elimination or optimization.

As a result, manufacturers of refrigeration appliances of the above-noted kind have more resolutely oriented their efforts towards producing liners that, while having a reduced wall thickness, would anyway prove effective in ensuring in a most reliable manner that forming them with the usual processes would not affect the integrity, safety and quality of the corner regions thereof, where material straining is most pronounced.

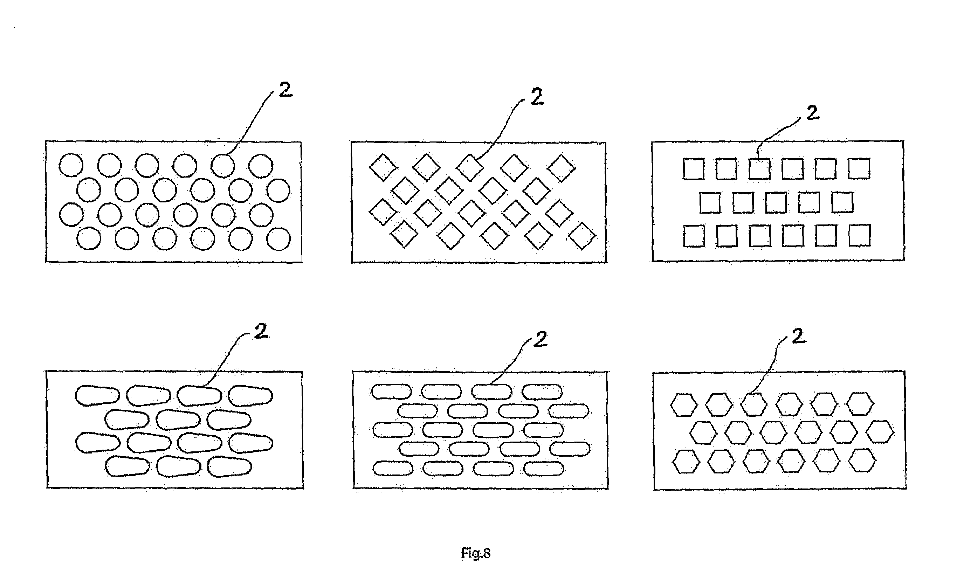

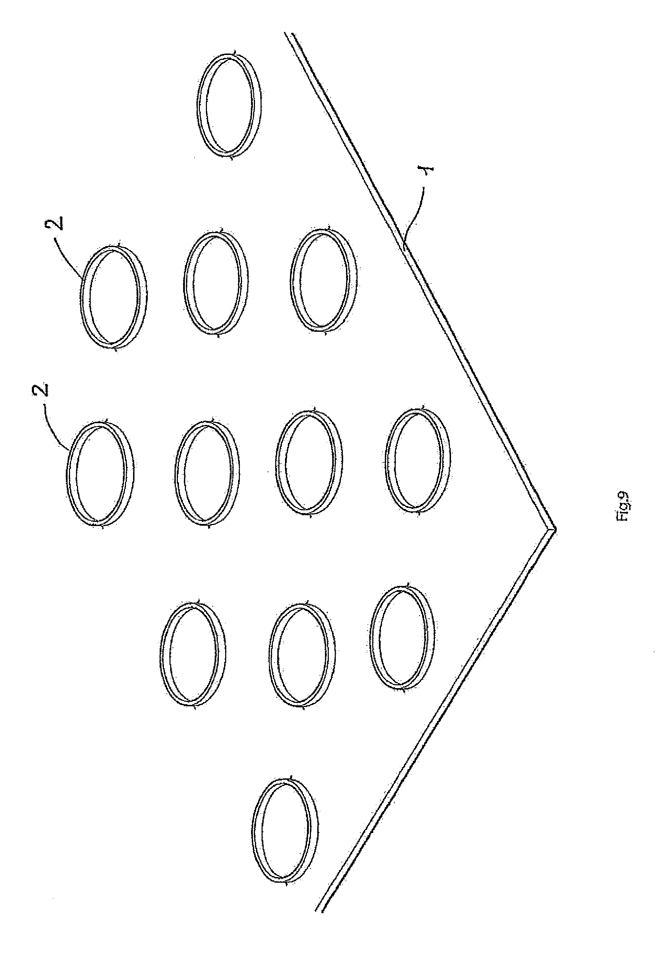

In an attempt to meet such requirement and meet the above-noted target, various solutions have in the meantime been identified by the industry. So, for example,
1) the solution proposed in EP 1 744 114 A2 to Samsung Gwangiu Electronics Co., Ltd., is based on providing corner portions of the liner with appropriate reinforcement zones, in the form of portions that are more generously sized in their extension, but not in their thickness, actually, and variously shaped in a "wavy" pattern (see Figures 8, 9), so as to ensure that the pressure exerted thereupon by the foamed insulating material provided therearound will not distort or deform the same corner regions thanks to the creation of an area that is configured so as to allow the wall of the liner to more readily and easily stretch and spread out in said corner portions thereof, thereby preventing them from undergoing excessive strain and a resulting reduction in the thickness thereof.
   This solution, however, has a major drawback in that, if the thickness of the walls that are due to remain planar is on the one hand reduced in view of attaining the required material saving effect, this would on the other hand bring about a significant risk of such planar walls warping inwardly, i.e. bulging towards the interior of the liner, albeit without suffering any cracking and keeping an acceptable extent of surface integrity.
   On the other hand, if the thickness of said walls, and therefore of the extruded sheet used as a starting material, is adjusted to meet such requirement, this would give rise to a situation of mutually clashing effects in that the much sought-after material saving achievements would unavoidably be nullified and, furthermore, the particular configuration of the corner regions would be of no avail at all.
2) The publication US 6,063,293 tackles the problem of ensuring greater robustness to the entire structure of the outer casing, or cabinet, of a refrigeration apparatus, as required to compensate for a general reduction in the weight of the main component parts of said cabinet aimed at cutting the final cost of the apparatus itself (cf. col. 1, lines 10, 20); this aim is reached with an additional structure, consisting practically of an appropriately shaped sheet-metal framework that is applied inside the outer casing and connected to appropriate portions of the latter.
   This solution, while certainly effective, has however a drawback in that it still implies an additional cost relating to the fabrication and assembly of such reinforcing framework. Moreover, it concerns the entire structure of the outer casing or cabinet of the appliance, and not the sole liner thereof.
3) The US patent publication no. 6,138,432 to CAMCO Inc. considers the issue of reinforcing the inner liner of the door, i.e. the door liner of a refrigerator appliance, when such door liner is designed to support or include small shelves, accommodations, and the like, that are in turn due to accommodate and hold food items, bottles, and the like, which therefore tend to exert a weight, i.e. weigh down thereupon (cf. col. 1, lines 42, 50).
   For the desired reinforcing effect to be obtained, there is provided an inwardly open perimetrical support frame, the nature and purpose of which are similar to the ones of the afore-considered framework, so that the same drawbacks crop up again as in the preceding case.
4) The US patent application no. 2002/0190617 A1 tackles the same problem of reinforcing the inner liner of the door, i.e. the door liner of a refrigerator appliance; in this case, a solution is found in reinforcing the corners through the use of simple reinforcement brackets or flanges.
   However, even in this case the proposed solution cannot be considered as being applicable to reinforcing the corner regions of a refrigerator liner to any practical advantage.
5) Known from the disclosure in EP 1840489 A2 to Samsung Gwangiu Electronics Co., Ltd. Is a refrigerator appliance, the food storage liner of which is provided with walls that have a plurality of projections, or relieves, oriented towards the interior of the liner itself, wherein such projections or relieves have quite small a height as compared with the base thereof, and are provided so as to extend and distribute all over a large portion of said walls.
   Even in this case, the purpose of such projections lies in ensuring greater robustness to the related planar portions of the liner, primarily in view of preventing them from undergoing excessive warping or deformation during the foaming-in-place process, without incurring the well-known drawbacks connected with the use of internal support or reinforcement frames.
   However, such solution is most readily appreciated as being fully unacceptable from both an aesthetical and a functional point of view, since the liner wall facing the interior of the liner, i.e. the food storage compartment, is not completely smooth, as this is highly desirable for a number of practical reasons, but is rather covered by said projections or relieves; this ultimately prevents the same wall from being capable of being cleaned in a convenient, easy, quick and reliable manner, and - as this is largely known in the art - this represents a basic requirement for all refrigeration appliances intended for food storage and preservation applications to duly and unconditionally comply with.
   Moreover, this solution does not seem to be particularly advantageous under the economy aspect, either, since the reduction in material usage allowed by it turns out as being rather insignificant.
   A further drawback of this solution derives from the fact that the most critical regions of the liner, i.e. the corners, are not really involved or affected by it.
6) Dealing with the general problem of improving the robustness of the liner of a refrigerator apparatus are also the US patent publications nos. 7,108,341 B2 and 7,293,848 B2, as well as the US patent application no. 2004/0012315 A1.
   The substantially common solution proposed by the above-cited publications lies in providing appropriate strengthening uprights or stanchions for connection to the various portions of the liners.
   Although the proposed solution is undoubtedly a viable and effective one, even in this case it however appears to be neither advantageous from an economic point of view nor of any practical value to the actual purpose of strengthening the corners of the liner.

It would therefore be desirable, and it is a main object of the present invention, actually, to provide a refrigeration apparatus, such as in particular a refrigerator intended for home or residential use, which is provided with a liner that is effective in doing away with the drawbacks and disadvantages that are typical of prior-art liners currently and commonly used in refrigerators of the above-noted kind.

Within this general aim, it is a further purpose of the present invention to provide a production method that is adapted to manufacture the inventive liners in a manner that is simple, cost-effective and reliable, and further uses readily available techniques, tools and machinery.

According to the present invention, all these aims are reached in a refrigeration apparatus and a manufacturing method incorporating the features and characteristics as defined and recited in the appended claims.

Features and advantages of the present invention will anyway be more readily understood from the description that is given below by way of non-limiting example with reference to the accompanying drawings, in which:
- Figure 1 is a perspective view of a refrigerator liner of a general kind, on which there is applied the present invention;
- Figure 2 is a different perspective view of the same liner as the one shown in Figure 1, including an enlarged view of a portion thereof;
- Figure 3 is an enlarged perspective view of a corner portion of a liner according to a preferred embodiment of the present invention;
- Figure 4 is a view of a symbolical representation of a preferred feature of a liner according to the present invention;
- Figure 5 is a perspective, cross-sectional pictorial view of a different preferred feature of a liner according to the present invention;
- Figures 6 and 7 are views of respective modified embodiments of the feature of the liner shown in Figure 5;
- Figure 8 is a comprehensive, simplified view of a plurality of embodiments of isolated and singular strengthening relief patterns;
- Figures 9 to 14 are perspective views of respective outer surfaces of corresponding liners, each one of which is provided with a single one of the embodiments shown in Figure 8;
- Figures 15 and 16 are symbolical views of corresponding steps of an improved production method adapted to manufacture liners according to the present invention.

With reference to above-listed Figures, a refrigeration apparatus, such as in particular a refrigerator for home or residential use, is provided with an inner food-storage or cold-storage compartment that is defined and delimited by a liner 1 made of a thermoplastic material, such as polystyrene, ABS, or the like.

Usually, such liner is produced by means of a thermoforming or vacuum-forming process starting from an extruded sheet, in a manner that is largely known as such in the art.

According to the present invention, the outer surface 4 of said liner 1, i.e. the surface that is oriented to face the thermally insulating layer, usually consisting of polyurethane foam, is provided with a plurality of reinforcement relieves 2, which are integrally formed with the extruded sheet used as a starting material in the liner forming process.

Such relieves are preferably provided in the form of continuous elements spaced, i.e. separated from each other, which extend in a variety of forms and according to a variety of distribution patterns along and over the outer surface of the liner.

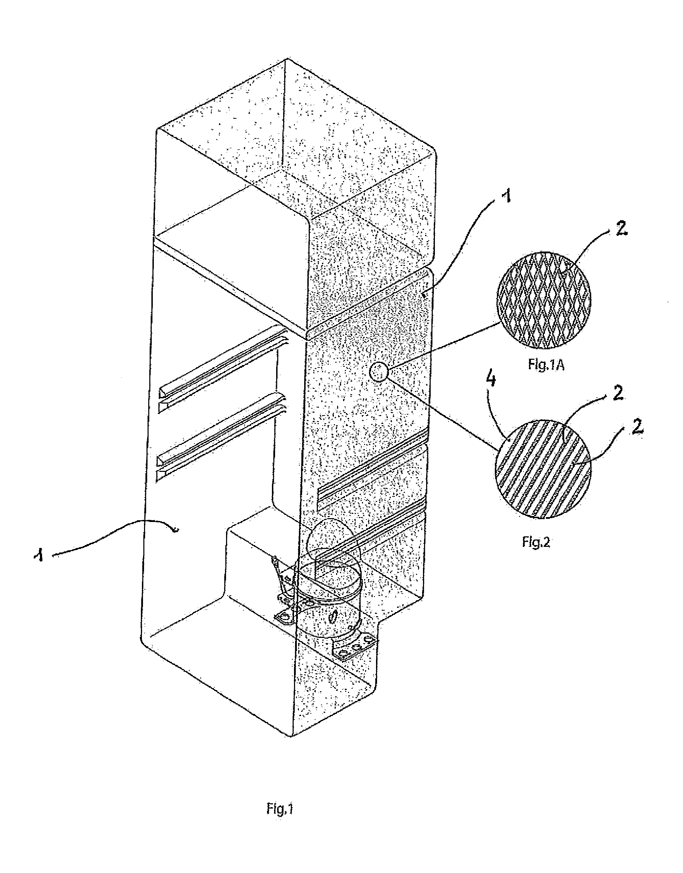

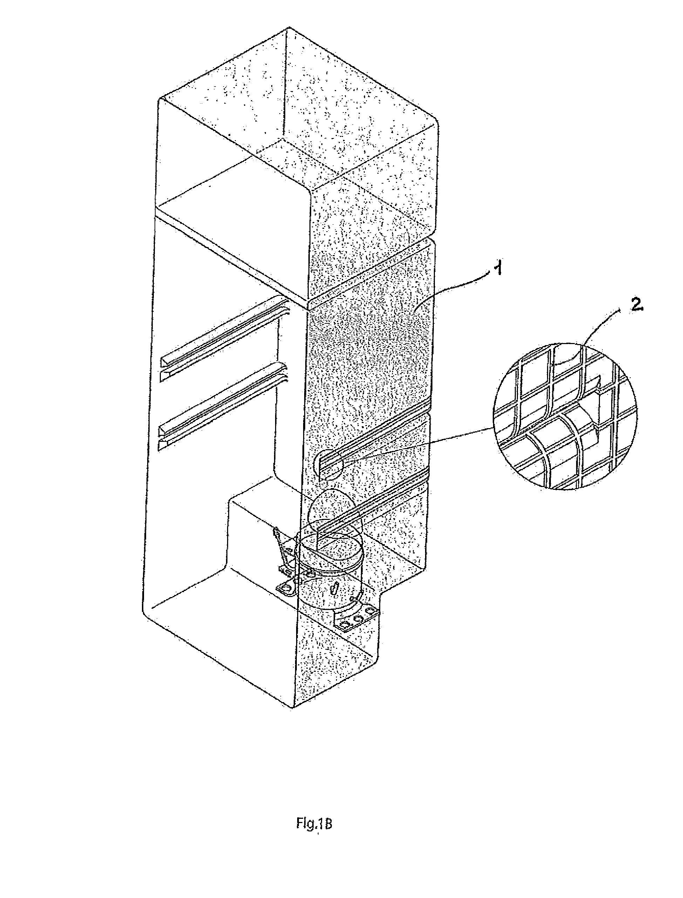

These relieves, which not only look out as ribs, but also perform in the way of strengthening ribs, actually, extend into a grid-like arrangement, as this is best shown in Figures 1A and 1 B, which are enlarged views of a preferred, symbolical embodiment thereof; other embodiments differing from these ones are of course possible, such as for instance a plurality of longitudinal, parallel relieves, as preferably aligned with each other, as shown symbolically in Figure 2.

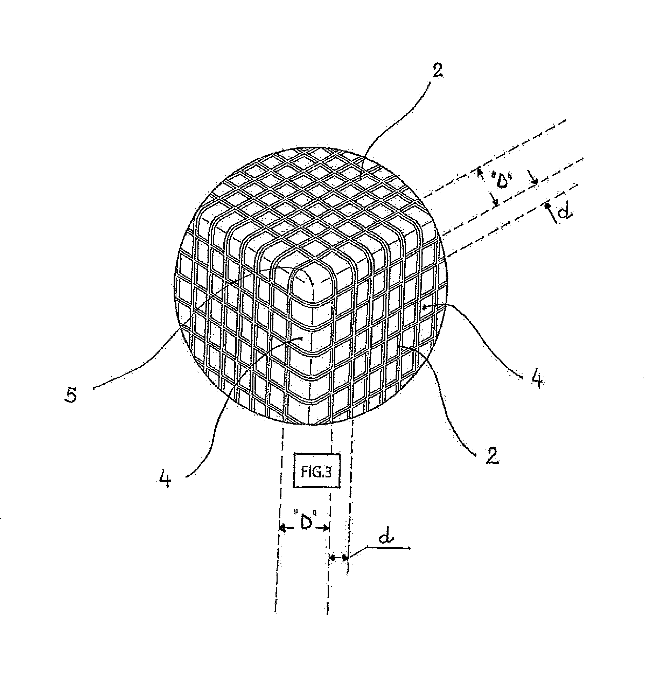

However, the embodiment illustrated in Figure 1, i.e. the one involving a grid-like pattern, has proven as being more effective since, for a same kind and amount of material used, allows for a more uniform stretching properties and resistance to strain in all directions; as a result, it is above all in and at the corner regions of a liner, or at the corners 5, as this is illustrated in Figure 3, that it becomes more advantageous, i.e. exactly where the stretching stress and, therefore, the resulting strain are sensibly different.

When reference is made to Figure 3, it can be readily noticed there that the distance D between these parallel reinforcement relieves in proximity of the edge 4 is greater than the distance d between the same relieves in an area lying more distant from the same edge.

In an advantageous manner, in order to simplify construction and in view of ensuring a greatest possible extent of resistance to stretching and related strain, such relieves are formed so as to follow a rectilinear course on the sheet used as a starting material in the liner forming process; it therefore is a matter of course that they eventually readjust into a variously curved pattern on the finished liner, in particular in proximity of or at the areas that have undergone a maximum extent of stretching and strain, such as close to or at the edge and corner regions.

In addition, and again in view of ensuring a maximum of uniformity in performance properties in terms of resistance and strength, as well as in view of facilitating the production of the extruded sheet used as a starting material in the liner forming process, these relieves have respective cross-sections that are substantially constant in the contour, i.e. shape and size thereof.

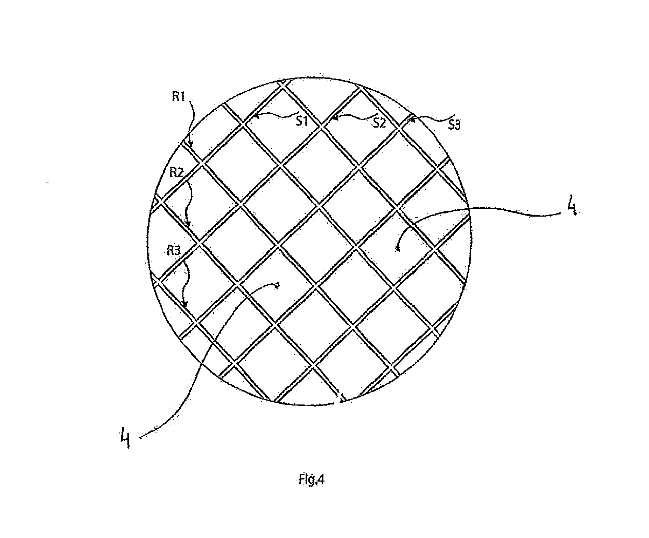

Advantageously, and with reference to Figure 4, the grid-like pattern formed by said relieves may result from the combination of two sets of relieves, wherein each such set solely comprises all relieves that are parallel to each other, such as the relieves r1, r2, r3...for a set and the relieves s1, s2, s3...for the other one.

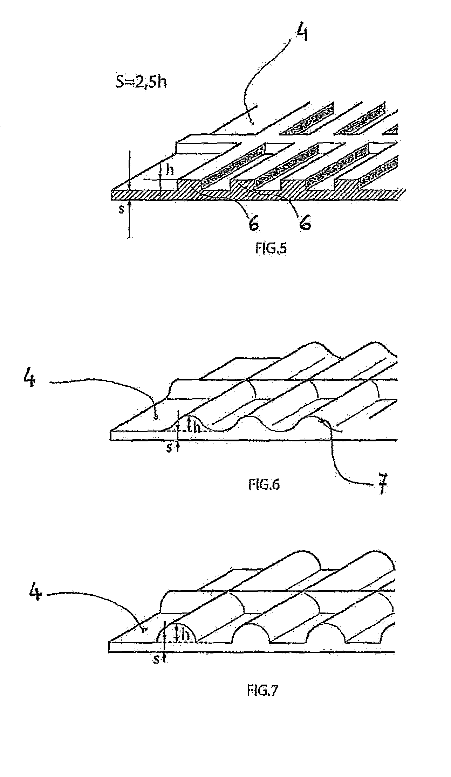

With reference to Figure 5, according to an embodiment that appears to be quite easy and uncomplicated to carry out, said reinforcement relieves 2 may be provided so as to have a similar square cross-sectional shape 6; however, other shapes or contours are also possible, such as for example a contour following kind of a "wavy" pattern 7, as shown in Figure 6, or a cross-sectional shape in the form of an arc of a circle, as shown in Figure 7.

In general, the present invention is based on the principle according to which the above-cited relieves are provided so that they are effective in giving a greater strength to and improving the elasticity of the material, which the liner is made of, while concurrently reducing the final weight or mass of the same material.

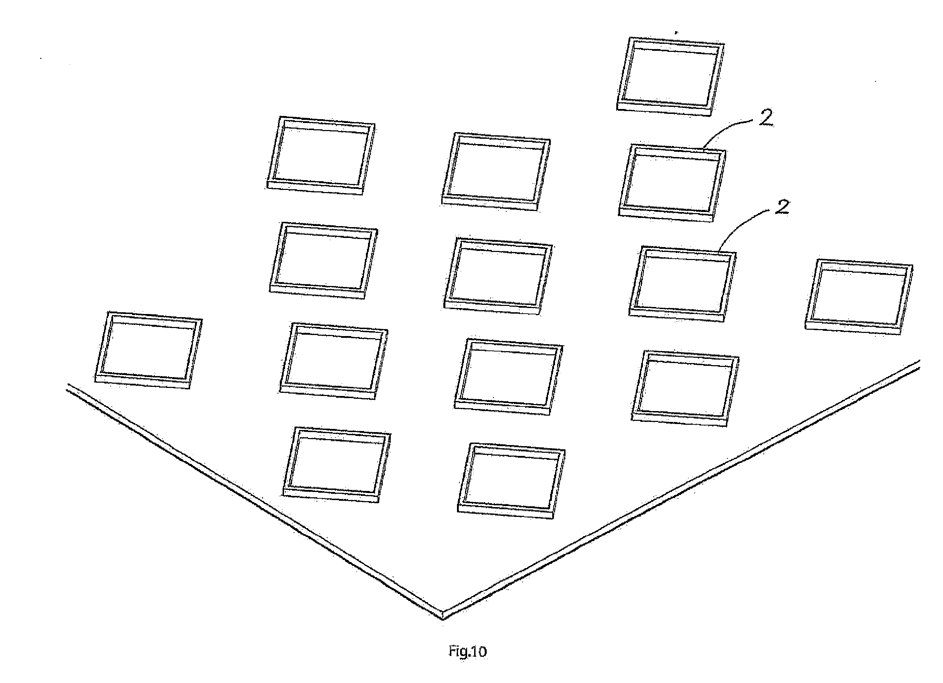

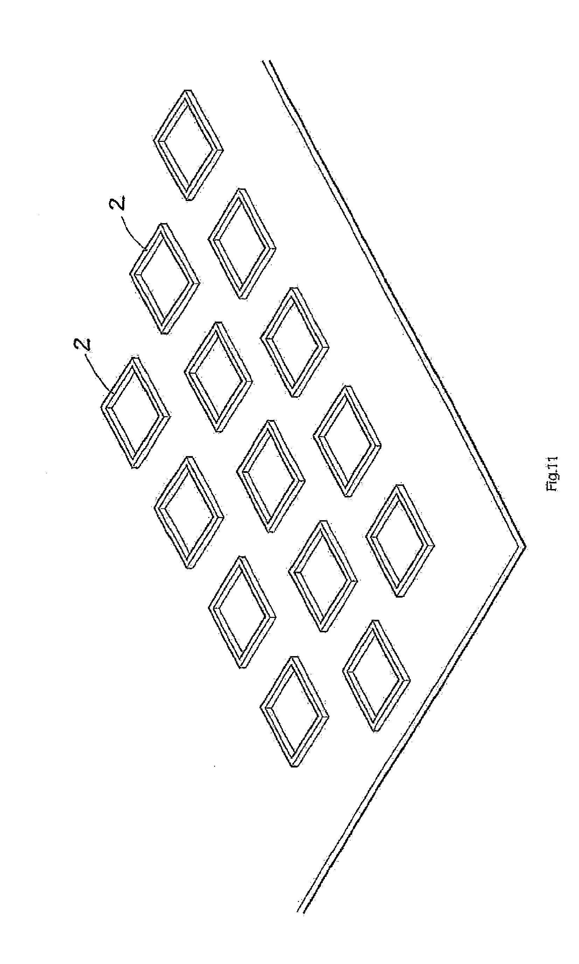

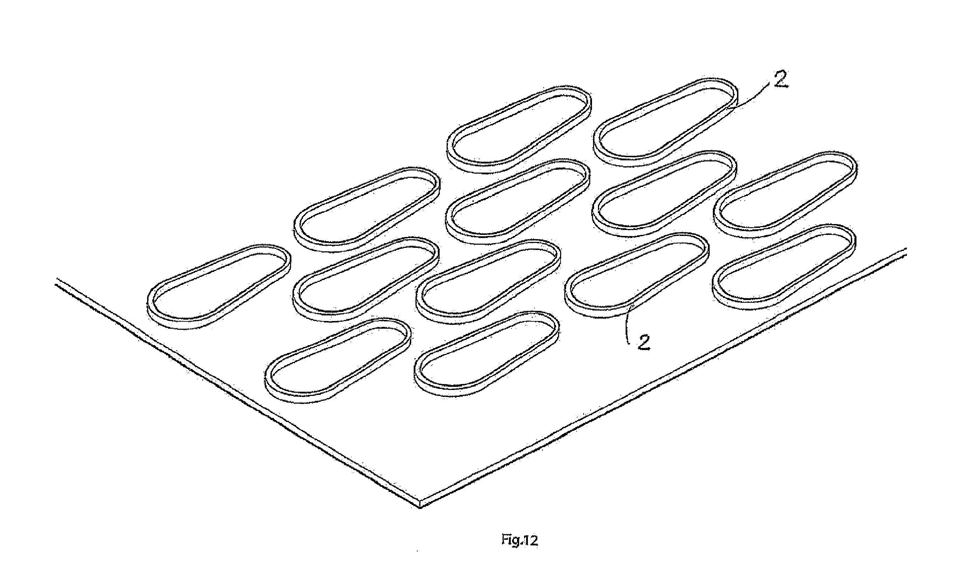

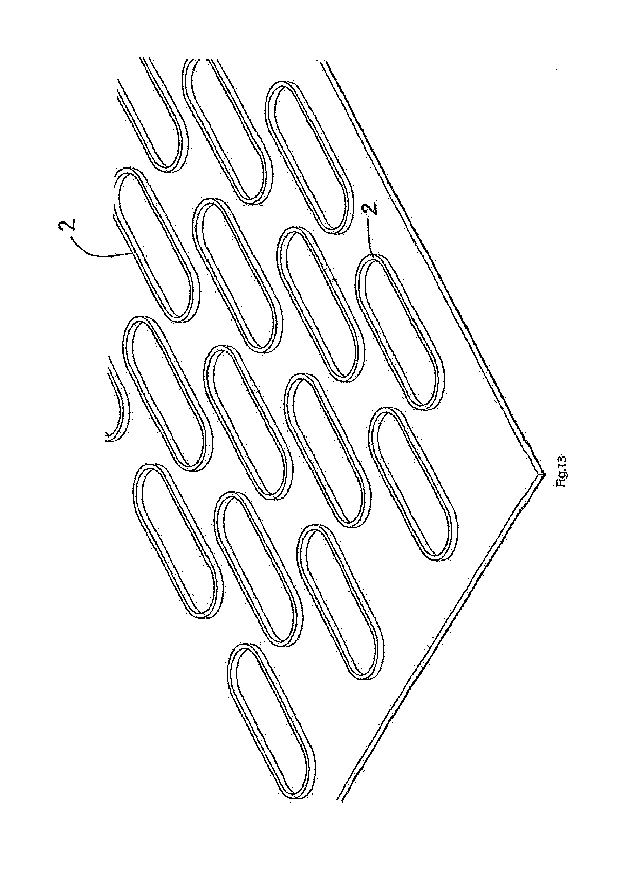

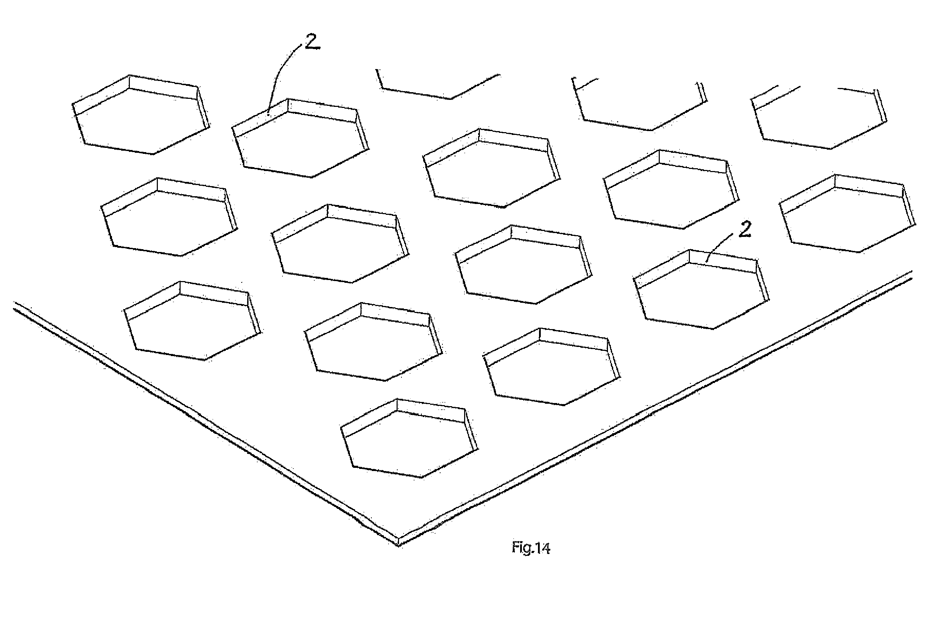

Now, such aim is not only reachable with the afore-illustrated embodiments, which - as illustrated hereinbefore - are substantially based on a grid-like pattern of substantially continuous and variously intertwining ribs. More than that, with reference to Figures 8 to 14, the same aim can be also reached by having said relieves arranged individually and isolated, i.e. separated from each other; in other words, each one of said relieves becomes a distinct, stand-alone element, without any point of contact or in common with the other similar relieves.

These relieves, therefore, can be provided in an extremely wide variety of shapes, contours and patterns 21, 22, 23, 24, 25, 26...., which practically share the sole basic, original aim of enabling material usage to be reduced, while ensuring the liner a still acceptable degree of robustness, strength and elasticity.

By mere way of illustrative and, for the matter, certainly non-limiting example, Figure 8 provides an overall view of a surface of a liner, on which there have been arranged six different forms and shapes of such self-standing, individual reinforcement relieves or ribs.

Figures 9 to 14, on the contrary, are perspective views of a respective surface of a liner, on each one of which there is represented a respective one of said different embodiments 21...26 of the reinforcement relieves shown together in Figure 8.

Regardless of the way in which they are also shaped and embodied, these relieves shall anyway be capable of ensuring the required or desired material saving effect. In this connection, it has been found that such aim can be reached in a variety of manners, i.e.:
- a first such manner is based on a balanced and reverse, i.e. reciprocal resizing of the wall thickness S of the liner in the portions thereof that are not covered or involved by said relieves, and the thickness h of said same relieves (see Figures 5 to 7) relative to each other, while keeping the design of said relieves constant;
- a second manner is based on re-balancing the thickness h of said relieves in combination with a reduction or an increase in the spacing between said relieves, thereby thickening or thinning them out, i.e. setting them in an arrangement in which they lie closer to or more spaced away from each other, while keeping the wall thickness S of the sheet forming the liner constant, of course;
- a third manner is based on re-balancing the wall thickness S of the liner, as measured in the regions or areas that are not covered or affected by said relieves, with the actual size of the spacing between the same relieves, by widening or narrowing it, as the case may be, while keeping the thickness h of the related relieves constant;
- as a general case, the possibility is of course given for all three said factors to be acted upon, i.e. design of the relieves and wider or narrower spacing between them, thickness h of said relieves and wall thickness S of the liner alone, in view of reaching a best possible trade-off between material saving effect and structural adequacy of the liner.

It has also been found that, by having all involved factors balanced in an optimum manner, a material saving effect can be easily achieved of not less than 15% as compared with the amount of material usually required to produce a substantially equivalent liner, and this without affecting the strength and resistance properties of the liner itself to any significant extent.

A result as the above-cited one can of course be obtained by repeating the same experiment on varied sets of the above-mentioned factors; such procedure, however, is well known to those skilled in the art, who are perfectly able to carry it out using normal laboratory practices, so that no need arises here for it to be described to any further detail.

Furthermore, in the case of a structure on which the relieves are arranged in a grid-like pattern, as in Figure 1, it has also been experimentally found that, in connection with liners used in normal refrigerator for home use, the spacing or distance between said relieves 2 should be so sized as to lie anywhere between 0.5 and 1.5 cm if an yet optimum trade-off between material saving effect and resistance to stretching and strain of the liner has to be reached.

As far as the production method used to form such liners according to the prior art is concerned, this comprises a first extrusion step, in which the sheet used as a starting material is formed, and a subsequent thermo-forming step, wherein the method further includes, immediately following the extrusion step, a rolling step in which the extruded sheet is laminated by causing it to pass through a pair of rollers, of which at least one is provided with an outer forming surface that is appropriately contoured so as to form the desired relieves, or relief pattern, on a surface of said sheet.

This continuous or almost continuous roll-forming process must of course be carried out on the sheet when the latter is still soft and, therefore, easily moulded into shape, which practically means immediately upon extrusion.

On the other hand, such process of roll-forming a sheet immediately upon the extrusion thereof is largely known in the art, so that, for the sake of brevity, it shall not be described here any further.

Up to this point, the invention has been described on the assumption that the liner is provided integrally in a single-piece construction and, as a result, with the various relieves on it that are substantially provided integrally with the walls, i.e. surfaces of the liner facing the interior of the cold storage compartment.

In fact, this is certainly the simplest and safest method. However, there may arise some particular circumstances, or even opportunities, due to which it is found more advantageous or suitable for the liner to be provided with the afore-described reinforcement relieves not through individual or successive extrusion and roll-forming processes, but rather through a process that calls for two sheets to be first extruded separately and then laminated together.

A process of this kind, wherein sheets are produced which are formed out of a plurality of layers of separately extruded material, is known as such in the art, and is for instance disclosed in US 5,225,140 and WO 02/28639, which reference should therefore be made to for further details.

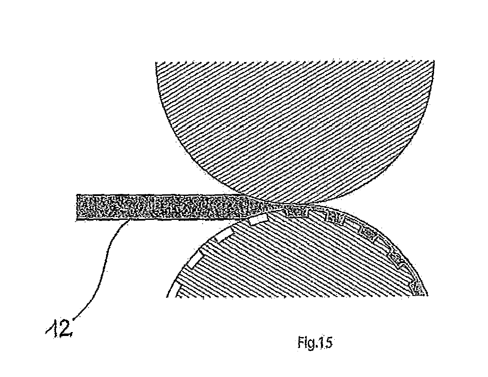

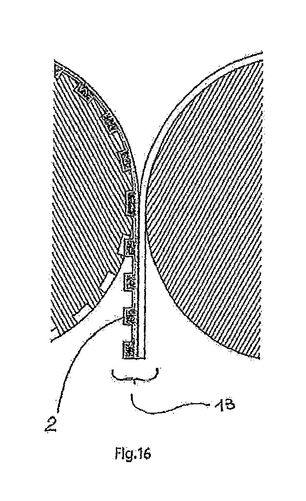

With reference to Figures 15 and 16, a first extruded sheet 11 is produced according to the usual technique, so that it is even and smooth on both faces thereof.
Separately therefrom, a second extruded sheet 12 is concurrently produced, which has to carry the reinforcement relieves on a face thereof, in the manner as explained afore.

Finally, said two extruded sheets 11 and 12 are joined together in a manner and using techniques as largely known as such in the art; in particular they are laminated together by rolling either under heat contribution or in the absence thereof, as this is symbolically illustrated in Figure 16.

At the end of the above-described process, a sheet 13 is obtained, which substantially incorporates the same features as the afore-described ones, since a face of this sheet is anyway smooth and even, while the opposite one is duly reinforced by said relieves 2.

In particular, the above-described process proves advantageous in those cases in which one of said sheets, i.e. typically the one facing the interior of the cold storage compartment, is required to have an appearance and a nature that are up to the particular use and application, and has therefore to be produced with the use of higher-quality or higher-grade and, therefore, more expensive materials, whereas the sheet due to face the heat-insulating layer may be produced out of any material whatsoever - even a recycled and, therefore, much cheaper material - as far as it complies with the required specifications in terms of mechanical properties.

## Claims

1. Refrigeration apparatus, in particular a refrigerator appliance intended for home or residential use, provided with an inner storage compartment for cold storing food, said compartment being delimited by a liner (1) made by a process of thermo-forming a sheet of thermoplastic material, **characterized in that** the outwards facing surface (4) of said liner, i.e. the surface thereof facing the heat-insulating layer provided therearound, comprises a plurality of reinforcement relieves (2) provided integrally with said surface of said liner.

2. Refrigeration apparatus according to claim 1, **characterized in that** said reinforcement relieves (2) are provided in the form of continuous elements that extend longitudinally along said outer surface of said liner.

3. Refrigeration apparatus according to claim 2, **characterized in that** said continuous elements are rectilinear, each one being constantly parallel to the respective portion of liner surface, on which they are disposed.

4. Refrigeration apparatus according to claim 1 or 2, **characterized in that** said continuous elements are in the form of elongated projecting ribs or similar ridge-like elements, the cross-section of which, lying orthogonally to the respective portion of liner surface, has a constant, i.e. unvarying contour and size.

5. Refrigeration apparatus according to any of the preceding claims, **characterized in that** said continuous elements are provided in a grid-like arrangement, and are gathered into one or more sets of elements, wherein the elements in each such set (r1, r2, r3...) are substantially parallel to each other.

6. Refrigeration apparatus according to claim 4, **characterized in that** said sets of elements are in the number of two, and **in that** the elements of each such set (r1, r2, r3...) are oriented at a substantially right angle relative to the elements (s1, s2, s3...) in the other set.

7. Refrigeration apparatus according to claim 4, **characterized in that** said relieves have a substantially square cross-sectional shape (6).

8. Refrigeration apparatus according to claim 5 or 6, **characterized in that** the relieves belonging to each such set (r1, r2, r3...; s1, s2, s3...) are arranged at a distance situated anywhere between 0.5 and 1.5 cm from each other.

9. Refrigeration apparatus according to claim 1, **characterized in that** said reinforcement relieves are arranged in the form of individual, distinct elements having no connection with and no zone of contact with each other, as well as sharing no common part said outer surface (4) of said liner (1).

10. Refrigeration apparatus according to any of the preceding claims, **characterized in that** said reinforcement relieves are provided integrally, i.e. as a one-piece construction with the sheet used as a starting material for producing said liner by thermoforming.

11. Liner for a refrigeration apparatus, **characterized in that** it is made and provided in accordance with any of the preceding claims.

12. Process for extruding a sheet for use as a starting material for thermoforming a liner for a refrigeration apparatus according to any of the preceding claims, **characterized in that** said reinforcement relieves are formed on said sheet by roll-forming them immediately upon the respective sheet having been extruded.

13. Process for extruding a sheet for use as a starting material for thermoforming a liner for a refrigeration apparatus according to any of the claims 1 to 11, **characterized in that** it comprises extruding two distinct sheets, of which a first sheet (11) is extruded without any such relief on it and a second sheet (12) is on the contrary extruded and concurrently provided with such relieves, and **in that** it comprises a subsequent step in which said two sheets (11, 12) are joined to each other so as to provide a resulting single sheet adapted to be thermoformed into said liner.

14. Process for extruding a sheet for use as a starting material for thermoforming a liner for a refrigeration apparatus according to claim 13, **characterized in that** said second sheet (12) is made of a material that is different from and preferably less expensive than the material which said first sheet (11) is made of.
